# EUROPÄISCHE PATENTANMELDUNG

(11) **EP 4 502 765 A1**
(43) Veröffentlichungstag der Anmeldung: **05.02.2025**
(21) Anmeldenummer: 23189568.1
(22) Anmeldetag: 03.08.2023
(51) Int. Cl.: G06F 3/01

(54) **SYSTEM ZUR BELEUCHTUNG DES GESICHTS**

(71) Anmelder: Sigrist, Valentin, 9042 Speicher (CH)
(72) Erfinder: Sigrist, Valentin, 9042 Speicher (CH)
(74) Vertreter: Kaminski Harmann Patentanwälte AG (Schweiz)

(57) **Zusammenfassung**

Die vorliegende Erfindung betrifft ein System 1 zur Bereitstellung einer auf einer Simulation basierenden virtuellen Realität für einen Benutzer des Systems 1, wobei das System 1 eine Beleuchtungseinheit 2, dazu ausgebildet, zumindest einen Teil eines Gesichts 3 des Benutzers, insbesondere eine Nase 4 des Benutzers, variabel zu beleuchten, und eine Steuerungseinheit, wobei die Steuerungseinheit dazu ausgebildet ist, Informationen von einer Recheneinheit zu erhalten, wobei die Recheneinheit dazu ausgebildet ist, aus, insbesondere optisch erfassten, dreidimensionalen Informationen 5 bezüglich des Gesichts ein Modell des Gesichts, insbesondere ein dreidimensionales Modell, zu erstellen die Simulation zu erstellen, wobei für die Erstellung der Simulation das Modell des Gesichts berücksichtigt wird, das Modell des Gesichts in die Simulation zu integrieren, eine Beleuchtung des Modells des Gesichts in der Simulation zu berechnen, und Informationen an die Steuerungseinheit zu übermitteln, wobei die Steuerungseinheit dazu ausgebildet ist, von der Recheneinheit Informationen hinsichtlich der Beleuchtung des Modells des Gesichts in der Simulation zu erhalten, wobei die Steuerungseinheit basierend auf den Informationen hinsichtlich der Beleuchtung des Modells des Gesichts in der Simulation die Beleuchtungseinheit 2 derart steuert, dass eine Beleuchtung des Gesichts 3 durch die Beleuchtungseinheit 2 mit der Beleuchtung des Modells des Gesichts in der Simulation korrespondiert.

## Beschreibung

### Gebiet der Erfindung

Die vorliegende Erfindung betrifft ein System zur Bereitstellung einer auf einer Simulation basierenden virtuellen Realität für einen Benutzer des Systems.

### Hintergrund der Erfindung

Head Mounted Displays (HMD) oder VR-Brillen sind übliche Systeme, um dem Benutzer eine interaktive simulierte Realität bereitzustellen. Die bereitgestellte Simulation wird von einem Softwareentwickler (z. B. dem Hersteller eines Videospiels) erstellt und dann dem Benutzer über das HMD angezeigt, so dass der Benutzer das Gefühl hat, sich in der Simulation zu befinden. Das HMD erzeugt also eine auf der Simulation basierende virtuelle Realität, die dem Benutzer z. B. über das Display im HMD vorgespielt wird oder mit der der Benutzer u. a. durch seinen eigenen Avatar interagieren kann.

Der Benutzer kann seinen Avatar zum Beispiel durch die Bewegung eines Controllers, eines Joysticks oder durch die Bewegung seines Körpers in einer von Sensoren erfassten Umgebung innerhalb einer simulierten Umgebung bewegen. Während dieser Bewegung des Avatars in der simulierten Umgebung wird der Avatar von verschiedenen Lichtquellen beleuchtet und die Richtung, aus der diese Lichtquellen auf den Avatar scheinen, ändert sich im Laufe der Bewegung.

Folglich ändert sich auch die Beleuchtung des Avatars in der Simulation ständig, insbesondere die Richtung der Beleuchtung und die Intensität der Beleuchtung. So können beispielsweise Wettereinflüsse in der Simulation (z. B. Regenwetter oder Sonnenschein) dazu führen, dass die Helligkeit einer simulierten Sonne in der Simulation ab- oder zunimmt.

Dementsprechend wirken sich diese Änderungen der Beleuchtungsbedingungen in der Simulation auf die Beleuchtung des Gesichts des Avatars aus, wobei Änderungen der Beleuchtungsbedingungen des Gesichts des Avatars in HMD-Systemen nach dem Stand der Technik über das in das HMD eingebaute Display an den Benutzer des Systems vermittelt werden, insbesondere durch Erhöhen oder Verringern der Helligkeit des Displays.

Da das Display jedoch als größere Fläche mit einem bestimmten Abstand zum Gesicht des Benutzers konzipiert ist und somit Licht entsprechend der Darstellung der Simulation emittiert, ist es bei HMD-Systemen nach dem Stand der Technik nicht möglich, bestimmte Gesichtspartien des Benutzers im Anzeigebereich des HMD derart selektiv mit Licht in jeweils unterschiedlichen Farben und Intensitäten zu beleuchten, dass die Beleuchtung des Benutzergesichts im Anzeigebereich des HMD der Beleuchtung dieses Gesichtsbereichs des Avatars in der Simulation entspricht.

Besonders zu erwähnen ist hier die Nase des Nutzers, die einerseits im Blickfeld des Nutzers liegt und andererseits durch ihre erhabene Architektur besonders leicht vom Display beleuchtet wird. Wird nun in der Simulation, in der sich der Avatar bewegt, z. B. eine verregnete, dunkle Umgebung dargestellt, leuchtet das Display die Nase an, um die Simulation darzustellen, obwohl die Nase des Avatars in der Simulation nicht direkt beleuchtet ist. Wird hingegen ein sehr sonniges, helles Gebiet in der Simulation angezeigt, reicht die Helligkeit des Displays möglicherweise nicht aus, um die Nase des Benutzers im HMD entsprechend der Helligkeit der Beleuchtung der Nase des Avatars in der Simulation zu beleuchten. Da sich die Nase im Blickfeld des Benutzers befindet, kann diese unangemessene Beleuchtung der Nase dazu führen, dass der Benutzer diese Beleuchtung unbewusst wahrnimmt, was sein Erlebnis der virtuellen Realität etwas stört oder dazu führt, dass er die virtuelle Realität als weniger realistisch empfindet.

### Aufgabe der Erfindung

Es ist deshalb eine Aufgabe der Erfindung, ein System bereitzustellen, die die Nachteile aus dem Stand der Technik überwindet.

Eine weitere Aufgabe liegt darin, ein System bereitzustellen, welches dem Benutzer ein verbessertes Erleben einer auf einer Simulation basierenden virtuellen Realität ermöglicht.

Eine weitere Aufgabe liegt darin, ein System bereitzustellen, welches dem Benutzer die virtuelle Realität derart bereitstellt, dass der Benutzer die virtuelle Realität als realistischer empfindet, insbesondere im Hinblick auf die Bereitstellung der Beleuchtung von Teilen des Gesichts des Benutzers.

Diese Aufgaben werden durch die Verwirklichung zumindest eines Teils der kennzeichnenden Merkmale der unabhängigen Patentansprüche gelöst. Merkmale, welche die Erfindung in alternativer oder vorteilhafter Weise weiterbilden, sind einigen der übrigen Merkmale der unabhängigen Patentansprüche und den abhängigen Patentansprüchen zu entnehmen.

### Zusammenfassung der Erfindung

Die Erfindung betrifft ein System zur Bereitstellung einer auf einer Simulation basierenden virtuellen Realität für einen Benutzer des Systems, wobei das System aufweist:
- eine Beleuchtungseinheit, dazu ausgebildet, zumindest einen Teil eines Gesichts des Benutzers, insbesondere eine Nase des Benutzers, variabel zu beleuchten, und
- eine Steuerungseinheit, wobei die Steuerungseinheit dazu ausgebildet ist, Informationen von einer Recheneinheit zu erhalten, wobei die Recheneinheit dazu ausgebildet ist,
   ∘ aus, insbesondere optisch erfassten, dreidimensionalen Informationen bezüglich des Gesichts ein Modell des Gesichts, insbesondere ein dreidimensionales Modell (3D-Modell), zu erstellen,
   ∘ die Simulation zu erstellen, wobei für die Erstellung der Simulation das Modell des Gesichts berücksichtigt wird,
   ∘ das Modell des Gesichts in die Simulation zu integrieren,
   ∘ eine Beleuchtung des Modells des Gesichts in der Simulation zu berechnen, und
   ∘ Informationen an die Steuerungseinheit zu übermitteln,
wobei die Steuerungseinheit dazu ausgebildet ist, von der Recheneinheit Informationen hinsichtlich der Beleuchtung des Modells des Gesichts in der Simulation zu erhalten, wobei die Steuerungseinheit basierend auf den Informationen hinsichtlich der Beleuchtung des Modells des Gesichts in der Simulation die Beleuchtungseinheit derart steuert, dass eine Beleuchtung des Gesichts durch die Beleuchtungseinheit mit der Beleuchtung des Modells des Gesichts in der Simulation korrespondiert.

Unter "korrespondiert" wird verstanden, dass die Beleuchtung des Gesichts durch die Beleuchtungseinheit mit der Beleuchtung des Modells des Gesichts in der Simulation in Beziehung steht, insbesondere wobei diese Beziehung derart ausgebildet ist, dass die beiden Beleuchtungen konvergieren (oder auch, dass sich die Beleuchtung des Gesichts durch die Beleuchtungseinheit an die Beleuchtung des Modells des Gesichts in der Simulation annähert, wodurch sich die beiden Beleuchtungen ähnlich sind). Im Optimalfall korrespondieren die Beleuchtung des Gesichts durch die Beleuchtungseinheit und die Beleuchtung des Modells des Gesichts in der Simulation derart (bzw. stehen derart in Beziehung zueinander), dass die Beleuchtung des Gesichts durch die Beleuchtungseinheit der Beleuchtung des Modells des Gesichts in der Simulation entspricht (oder auch, dass sich die Beleuchtung des Gesichts durch die Beleuchtungseinheit und die Beleuchtung des Modells des Gesichts in der Simulation gleichen / übereinstimmen / zusammenpassen).

Das System versucht, die Beleuchtungseinheit derart zu steuern, dass die Beleuchtung des Gesichts durch die Beleuchtungseinheit der Beleuchtung des Modells des Gesichts in der Simulation entspricht. Eine exakte Gleichheit dieser beiden Beleuchtungen ist in der Realität jedoch nur sehr schwer oder teilweise gar nicht realisierbar, da Parameter wie beispielsweise die Lichtintensität, Lichttemperatur, Lichtfarbe und/oder Beleuchtungsstärke der Beleuchtung in der Simulation, insbesondere der Beleuchtung des Modells des Gesichts in der Simulation, je nach Erstellung der Simulation / Programmierung sehr stark variiert werden können, während diese Parameter bei der Beleuchtung des Gesichts in der Realität (also beispielsweise durch die Beleuchtungseinheit innerhalb einer VR-Brille) aufgrund von technischen Limitationen deutlich weniger variierbar sind. Solche technischen Limitationen können beispielsweise dadurch gegeben sein, dass die Lichtquelle (z.B. eine oder mehrere LED) der Beleuchtungseinheit nur Licht in einem bestimmten Wellenlängenbereich (was wiederum die Lichtfarbe beeinflusst) oder in einem bestimmten Intensitätsbereich ausstrahlen kann. Die Steuerungseinheit erhält dabei von der Recheneinheit die Informationen hinsichtlich der Beleuchtung des Modells des Gesichts in der Simulation und steuert die Beleuchtungseinheit dann so, dass die Beleuchtung des Gesichts durch die Beleuchtungseinheit im Rahmen der beispielsweise durch die Bauart der Lichtquelle und/oder den Aufbau der Beleuchtungskammer innerhalb der VR-Brille vorliegenden technischen Gegebenheiten mit der Beleuchtung des Modells des Gesichts in der Simulation korrespondiert, insbesondere wobei dieses Korrespondieren dadurch ausgebildet ist, dass die beiden Beleuchtungen konvergieren (bzw. sich die Beleuchtung des Gesichts durch die Beleuchtungseinheit (so nah wie möglich) an die Beleuchtung des Modells des Gesichts in der Simulation annähert). Im besten Fall sind die beiden Beleuchtungen identisch, bzw. so identisch, (oder auch, sie konvergieren derart) dass Sehvermögen und Unterbewusstsein des Benutzers keine Unterschiede in der Beleuchtung wahrnehmen können und somit eine realistischere Bereitstellung der virtuellen Realität durch das erfindungsgemässe System ermöglicht ist.

Dadurch, dass das erfindungsgemäße System dafür sorgt, dass die Beleuchtung des Gesichts des Benutzers mit der Beleuchtung des Modells des Gesichts in der Simulation konvergiert (bzw. zumindest annähernd übereinstimmt) und es nicht zu den zuvor beschriebenen Beleuchtungsunterschieden wie bei VR-Systemen des Standes der Technik kommen kann, wobei diese Beleuchtungsunterschiede vom Benutzer zumindest unterbewusst wahrgenommen werden, nimmt der Benutzer die ihm vermittelte virtuelle Realität durch den Einsatz des erfindungsgemäßen Systems als realistischer wahr als bei VR-Systemen des Standes der Technik.

Unter dem Begriff Simulation wird neben einer (künstlich erschaffenen) computeranimierten Umgebung/Welt, wie sie beispielsweise für Computerspiele verwendet wird, auch ein (3D-)Film bzw. Filmsequenz, ein (3D-) Bild, etc. verstanden, die dem Benutzer des Systems angezeigt werden kann und es ihm so ermöglicht in eine virtuelle Realität einzutauchen. Mittels der Recheneinheit kann dabei das Modell des Gesichts beispielsweise für die Erstellung des Gesichts des Avatars in einem Computerspiel verwendet werden und/oder das Modell des Gesichts beispielsweise in einen Film eingefügt werden.

Die Steuerungseinheit ist beispielsweise als ein Steuergerät (wie es beispielsweise in der Automobilindustrie verwendet wird) oder als Mikrokontroller (MCU) ausgebildet. Die Steuerungseinheit erhält dabei von der Recheneinheit Informationen/Daten, verarbeitet diese Daten und sendet entsprechende Befehle an die Beleuchtungseinheit aus. Da insbesondere Mikrokontroller eine geringe Grösse aufweisen, kann die Steuerungseinheit auch in die Beleuchtungseinheit integriert werden, wodurch das System aus Beleuchtungseinheit und Steuerungseinheit kompakt und einteilig ausgestaltet werden kann, was wiederum den Einbau in visuelle Ausgabegeräte wie VR-Brillen für den Benutzer erleichtert.

Die Recheneinheit ist beispielsweise als ein Prozessor, insbesondere als ein Mikroprozessor, ausgebildet, der Daten (z.B. die als Daten vorliegenden dreidimensionalen Informationen bezüglich des Gesichts) erhalten, verarbeiten und übertragen kann.

Die dreidimensionalen Informationen bezüglich des Gesichts sind beispielsweise Informationen hinsichtlich der räumlichen Ausdehnung des Gesichts, wie z.B. Breite, Höhe und Tiefe des Gesichts, der Gesichtsgeometrie bzw. der Geometrie und Anordnung von Teilen des Gesichts, aber auch Informationen hinsichtlich des Vorliegens von Erhebungen, wie beispielsweise die Nase, oder Vertiefungen, wie z.B. Narben. Diese dreidimensionalen Informationen bezüglich des Gesichts können beispielsweise mittels Fotogrammmetrie aus Fotos des Gesichts, die beispielsweise von einer Kamera aufgenommen wurden, extrahiert werden. Alternativ oder ergänzend hierzu, können zuerst mehrere (mindestens zwei) Bilder des Gesichts (aus verschiedenen Positionen, aber mit einem gewissen Grad an Überschneidung aufgenommen) mittels eines "Stitching"-Verfahrens zu einem Bild zusammengefügt werden und anschliessend aus diesem zusammengefügten Bild mittels Fotogrammmetrie die dreidimensionalen Informationen bezüglich des Gesichts (als 3D-Daten) extrahiert werden.

Die dreidimensionalen Informationen bezüglich des Gesichts können beispielsweise aus (2D- und/oder 3D-) Bilddaten, die beispielsweise von einer Kamera aufgenommen wurden, *Light-Imaging-Detection-Ranging-Daten* (LiDAR-Daten) oder 3D-Punktwolkendaten, die jeweils beispielsweise von einem Laserscanner aufgenommen wurden, abgeleitet / erhalten werden.

Das Modell des Gesichts kann beispielsweise ein dreidimensionales Oberflächengitternetz (Drahtgittermodell) sein.

Informationen hinsichtlich der Beleuchtung des Modells des Gesichts in der Simulation können beispielsweise sein: welche Teile des Gesichts und aus welcher Richtung sie beleuchtet werden; mit welcher Intensität (wie stark) die jeweiligen Teile des Gesichts beleuchtet werden; und/oder mit welcher Lichttemperatur/Lichtfarbe die jeweiligen Gesichtsteile beleuchtet werden.

Das erfindungsgemässe System kann dabei beispielsweise nur als Beleuchtungseinheit mit einer Steuerungseinheit ausgebildet sein, wobei dieses System dann an beispielsweise einer VR-Brille, die die auf der Simulation basierenden virtuellen Realität für den Benutzer anzeigt, angebracht werden kann. Das System wird dabei beispielsweise in dem als eine Art Kammer ausgebildeten Innenbereich, also der Teil der VR-Brille, der zwischen der Anzeigeeinheit (z.B. Bildschirm) und dem Gesicht des Benutzers liegt, (z.B. an extra für ein solches System vorgesehenen Anordnungs-/Fixierstellen in der VR-Brille) angeordnet und kann von dort aus den Teil des Gesichts des Benutzers beleuchten der sich innerhalb der Kammer der VR-Brille befindet. Die Steuerungseinheit steht dabei im Informationsaustausch mit der Recheneinheit. Diese Recheneinheit ist bei dieser Ausführungsform nicht Teil des Systems, sondern ist z.B. als Prozessor auf einem Computer oder in der VR-Brille ausgebildet. Die Recheneinheit übermittelt dabei beispielsweise mittels Kabel oder drahtloser Datenübertragung Informationen / Daten hinsichtlich der Beleuchtung des Modells des Gesichts in der Simulation an die Steuerungseinheit, woraufhin die Steuerungseinheit dann die Beleuchtungseinheit steuert, um das Gesicht in der VR-Brille entsprechend zu beleuchten. Der Vorteil dieser Ausgestaltung des erfindungsgemässen Systems ist, dass bereits bestehende VR-Systeme ohne Beleuchtungseinheit ganz einfach mit dem erfindungsgemässen System nachgerüstet werden können.

In einer exemplarischen Ausführungsform des erfindungsgemässen Systems, weist das System die Recheneinheit, eine erste Aufnahmeeinheit, insbesondere eine Kamera, wobei die erste Aufnahmeeinheit dazu ausgebildet ist, die dreidimensionalen Informationen bezüglich des Gesichts, insbesondere optisch, zu erfassen, und/oder ein visuelles Ausgabegerät bzw. Head-Mounted-Display (HMD), insbesondere eine Brille zur Anzeige der virtuellen Realität bzw. eine Virtual-Reality-Brille (VR-Brille), auf, wobei das visuelle Ausgabegerät dazu ausgebildet ist, dem Benutzer die virtuelle Realität anzuzeigen, und/oder eine Anzeigeeinheit aufweist, wobei die Anzeigeeinheit als ein Bildschirm ausgebildet ist, wobei auf dem Bildschirm die Simulation anzeigbar ist.

Das erfindungsgemässe System kann beispielsweise auch als eine Art Gesamtsystem ausgebildet sein, in dem die Beleuchtungseinheit, die Steuerungseinheit und die Recheneinheit fest in dem visuellen Ausgabegerät, z.B. der VR-Brille, verbaut sind. Die erste Aufnahmeeinheit kann dabei beispielsweise auch fest in dieses Gesamtsystem eingebaut sein oder als eine davon getrennte Aufnahmeeinheit ausgebildet sein, z.B. ein Smartphone, das Bilder von dem Gesicht des Benutzers aufnimmt und an die Recheneinheit sendet. Der Vorteil dieser Ausgestaltung des erfindungsgemässen Systems ist, dass die einzelnen Bauteile schon während der Fertigung oder spätestens beim Zusammenbau in ihrer äusseren Form und ihrer technischen Modifikation aufeinander abgestimmt werden können und so zum einen Design und/oder Passgenauigkeit und zum anderen das technische Zusammenspiel, insbesondere der Elektronik, weniger Anfällig für Störungen ist.

In einer weiteren exemplarischen Ausführungsform des erfindungsgemässen Systems, zieht die Recheneinheit Einstellungsparameter, insbesondere Einstellungsparameter wie Hautfarbe, Zubehör wie Brillen und/oder Schmuck, Lichtpräferenzen, insbesondere Lichtintensität, Lichttemperatur, Lichtfarbe und/oder Beleuchtungsstärke, der Beleuchtung in der Simulation, insbesondere der Beleuchtung des Modells des Gesichts in der Simulation, und/oder der Beleuchtung des Gesichts durch die Beleuchtungseinheit, die durch eine manuelle Eingabe des Benutzers und/oder durch eine Eingabe eines Anbieters/Herstellers der Simulation (z.B. ein Softwareentwickler), insbesondere über eine Programmierschnittstelle bzw. eine Application-Programming-Interface-Schnittstelle (API-Schnittstelle), bereitstellbar sind, für
- die Erstellung des Modells des Gesichts,
- die Erstellung der Simulation,
- die Integration des Modells des Gesichts in die Simulation, und/oder
- die Berechnung der Beleuchtung des Modells des Gesichts in der Simulation,
heran.

Diese Ausführungsform hat den Vorteil, dass der Benutzer und/oder der Anbieter/Hersteller der Simulation (z.B. der Entwickler eines Computerspiels) der Recheneinheit Informationen, z.B. Einstellungen im Hinblick auf das Modell des Gesichts, Einstellungen im Hinblick auf den Avatar, Einstellungen im Hinblick auf die Eigenschaften des Lichts in der Simulation und/oder Einstellungen im Hinblick auf die Eigenschaften des von der Beleuchtungseinheit ausgesendeten Lichts, bereitstellen kann und so die Beleuchtung durch die Beleuchtungseinheit, die Beleuchtung in der Simulation und/oder die Beleuchtung des Modells des Gesichts in der Simulation (individuell) nach den entsprechenden Wünschen angepasst werden kann.

In einer weiteren exemplarischen Ausführungsform ist die erste Aufnahmeeinheit an dem visuellen Ausgabegerät angeordnet, und/oder erfasst Bewegungen des Gesichts als aktualisierte dreidimensionale Informationen bezüglich des Gesichts und die Recheneinheit passt das Modell des Gesichts basierend auf den aktualisierten dreidimensionalen Informationen bezüglich des Gesichts an.

Diese Ausführungsform hat den Vorteil, dass das von der Recheneinheit erstellte Modell des Gesichts ständig aktualisiert werden kann, wodurch auch die Beleuchtung des aktualisierten Modells des Gesichts in der Simulation aktualisiert wird. Sollte sich hierbei eine Änderung der Beleuchtung des Modells des Gesichts in der Simulation ergeben, so ist das erfindungsgemäße System in der Lage mittels der Steuerungseinheit die Beleuchtungseinheit derart zu steuern, dass die Beleuchtung des Gesichts durch die Beleuchtungseinheit mit der Beleuchtung des aktualisierten Modells des Gesichts in der Simulation korrespondiert (bzw. an die Beleuchtung des aktualisierten Modells des Gesichts in der Simulation angenähert ist bzw. der Beleuchtung des aktualisierten Modells entspricht). Auf diese Weise nimmt der Benutzer auch nach Bewegen seines Gesichts die vermittelte virtuelle Realität als sehr realistisch war.

In einer weiteren exemplarischen Ausführungsform weist das visuelle Ausgabegerät einen ersten Bewegungssensor auf, der dazu ausgebildet ist, eine Kopfbewegung des Benutzers zu erfassen.

Auf diese Weise werden Bewegungen des visuellen Ausgabegeräts und somit Kopfbewegungen des Benutzers erfasst und daraus mittels der Recheneinheit die Ausrichtung/Orientierung des Gesichts relativ zur restlichen Körper und/oder relativ zur Ausrichtung des Gesichts vor der Kopfbewegung abgeleitet. Diese Information über die Ausrichtung des Gesichts kann von der Recheneinheit weiterverarbeitet werden, wodurch unter anderem die Ausrichtung des Modells des Gesichts in der Simulation (relativ zur Ausrichtung des Modells des Gesichts vor der Kopfbewegung) bestimmt werden kann. Daraus kann die Recheneinheit beispielsweise Änderungen bei der Beleuchtung des Modells des Gesichts in der Simulation ableiten (z.B. wird das Modell des Gesichts in der Simulation weniger stark beleuchtet, wenn sich der Kopf und somit das Gesicht von der Sonne wegdreht und umgekehrt). Diese erfasste Änderung der Beleuchtung des Modells des Gesichts in der Simulation wird als Information von der Recheneinheit an die Steuerungseinheit übertragen, wobei dann die Steuerungseinheit die Beleuchtungseinheit entsprechend steuert, um die Beleuchtungsverhältnisse des Modells des Gesichts in der Simulation und des Gesichts innerhalb des visuellen Ausgabegerätes anzugleichen.

In einer weiteren exemplarischen Ausführungsform weist das System mindestens eine Bewegungseinheit (z.B. ein Controller, ein Joystick, etc.) auf, wobei die mindestens eine Bewegungseinheit
- an einem Körperteil, insbesondere an einer Hand, des Benutzers angeordnet ist, und
- einen zweiten Bewegungssensor aufweist, der dazu ausgebildet ist, eine Bewegung des besagten Körperteils zu erfassen.

In einer weiteren exemplarischen Ausführungsform weisen das visuelle Ausgabegerät und die mindestens eine Bewegungseinheit jeweils mindestens einen Positionssensor auf, wobei die Recheneinheit eine Position des visuellen Ausgabegeräts und dadurch des Gesichts des Benutzers relativ zu einer Position der mindestens einen Bewegungseinheit bestimmt.

In einer weiteren exemplarischen Ausführungsform zieht die Recheneinheit die von dem ersten Bewegungssensor, dem zweiten Bewegungssensor und/oder den jeweiligen Positionssensoren bereitgestellten Daten für
- die Erstellung der Simulation, und/oder
- die Berechnung der Beleuchtung des Modells des Gesichts in der Simulation,
heran.

In einer weiteren exemplarischen Ausführungsform berechnet die Recheneinheit für die Erstellung der Simulation, und/oder die Berechnung der Beleuchtung des Modells des Gesichts in der Simulation, insbesondere unter Berücksichtigung der bereitgestellten Einstellungsparameter,
- aus welcher Richtung Licht einer in der Simulation vorgesehenen Lichtquelle auf das Modell des Gesichts in der Simulation strahlt,
- wie das Licht, insbesondere Lichtintensität, Lichttemperatur, Lichtfarbe und/oder Beleuchtungsstärke, der Lichtquelle das Modell des Gesichts in der Simulation beleuchtet,
- wie eine aus den von der ersten Aufnahmeeinheit erfassten dreidimensionalen Informationen abgeleitete Gesichtsgeometrie die Beleuchtung des Modells des Gesichts in der Simulation beeinflusst,
- wo sich das Modell des Gesichts in der Simulation relativ zur Lichtquelle befindet,
- ob weitere Körperteile, insbesondere das Körperteil an dem die mindestens eine Bewegungseinheit angeordnet ist, in der Simulation Schatten auf das Modell des Gesichts in der Simulation werfen, wodurch insbesondere die Beleuchtungsstärke in Bereichen, in denen Schatten auf das Modell des Gesichts in der Simulation geworfen werden, reduziert ist,
- wie Wettereinflüsse in der Simulation die Beleuchtung des Modells des Gesichts in der Simulation, insbesondere hinsichtlich Lichtintensität, Lichttemperatur, Beleuchtungsstärke und/oder Reflexionen, beeinflussen,
- wie weit die Lichtquelle von dem Modell des Gesichts in der Simulation entfernt ist, und/oder
- wie das Licht der Lichtquelle von Objekten in der Simulation reflektiert wird, insbesondere wobei die Recheneinheit für die Berechnung Lichtquellen der Simulation, die sich in einem Blickfeld des Benutzers und/oder Lichtquellen der Simulation, die sich nicht im Blickfeld des Benutzers befinden, heranzieht.

Diese Ausführungsform hat den Vorteil, dass die Recheneinheit die Beleuchtung des Modells des Gesichts in der Simulation stetig neu berechnet. Sollten sich hierbei Änderungen der Beleuchtung des Modells des Gesichts in der Simulation ergeben, so passt die Beleuchtungseinheit die Beleuchtung des Gesichts in dem visuellen Ausgabegerät entsprechend an, wodurch das realistische Erlebnis der vermittelten virtuellen Realität für den Benutzer auch bei Änderungen der zuvor genannten Aspekte in der Simulation erhalten bleibt.

Eine weitere exemplarische Ausführungsform des erfindungsgemässen Systems, wobei
- die erste Aufnahmeeinheit eine Blickrichtung des Benutzers erfasst,
- die Recheneinheit aus der von der ersten Aufnahmeeinheit erfassten Blickrichtung ein Blickfeld des Benutzers ableitet, und
- die Steuerungseinheit die Beleuchtungseinheit derart steuert, dass
   ∘ die Beleuchtung auf die Teile des Gesichts gedimmt und/oder ausgeschaltet ist, die sich nicht im Blickfeld des Benutzers befinden, und/oder
   ∘ die Beleuchtung auf die Teile des Gesichts verstärkt ist, die sich im Blickfeld des Benutzers befinden.

Diese Ausführungsform hat den Vorteil, dass insbesondere die Teile des Gesichts, die sich im Blickfeld des Benutzers befinden und somit zumindest unterbewusst wahrgenommen werden, besonders gut beleuchtet werden können bzw. die Beleuchtung dieser Gesichtsteile durch die Beleuchtungseinheit besonders nahe an die Beleuchtung dieser Gesichtsteile in der Simulation herankommt, wodurch sich die virtuelle Realität für den Benutzer des Systems besonders real anfühlt.

In einer weiteren exemplarischen Ausführungsform weist die Beleuchtungseinheit eine Lichtquelle, insbesondere eine Leuchtdiode (LED), auf.

Diese Ausführungsform hat den Vorteil, dass die Beleuchtungseinheit einfach und günstig erhalten werden kann.

In einer weiteren exemplarischen Ausführungsform weist die Beleuchtungseinheit zwei Lichtquellen, insbesondere LEDs, auf, wobei
- eine erste Lichtquelle, insbesondere eine erste LED, derart angeordnet und ausgerichtet ist, dass ein oberer Teil der Nase des Benutzers beleuchtet wird, und
- eine zweite Lichtquelle, insbesondere eine zweite LED, derart angeordnet und ausgerichtet ist, dass ein unterer Teil der Nase des Benutzers beleuchtet wird.

Diese Ausführungsform hat den Vorteil, dass die Beleuchtungseinheit verschiedene Bereiche der Nase unterschiedlich und unabhängig voneinander beleuchten kann, um so das Vorliegen von unterschiedlich beleuchteten Nasenbereichen des Gesichtsmodells in der Simulation nachstellen zu können. Auf diese Weise fühlt sich die virtuelle Realität für den Benutzer des Systems besonders real an.

In einer weiteren exemplarischen Ausführungsform weist die Beleuchtungseinheit ein Lichtlenkungselement, insbesondere eine Linse, und/oder eine Blende auf, jeweils dazu ausgebildet, Licht der Beleuchtungseinheit auf einen Teil des Gesichts des Benutzers, insbesondere die Nase des Benutzers, zu fokussieren.

Diese Ausführungsform hat den Vorteil, dass die Beleuchtung des Gesichts durch die Beleuchtungseinheit ganz individuell an die Wünsche des Benutzers angepasst werden kann.

In einer weiteren exemplarischen Ausführungsform ist eine Anordnung des Lichtlenkungselements und/oder der Blende an der Beleuchtungseinheit veränderbar, um die Beleuchtungseinheit an Gesichter unterschiedlicher Benutzer anpassbar zu machen.

Diese Ausführungsform hat den Vorteil, dass das erfindungsgemässe System von mehreren Benutzern genutzt werden kann und trotzdem für alle Benutzer auch bei unterschiedlicher Gesichtsform eine optimale Beleuchtung des Gesichts durch die Beleuchtungseinheit und ein optimaler Tragekomfort sichergestellt ist.

In einer weiteren exemplarischen Ausführungsform weist das System eine zweite Aufnahmeeinheit, insbesondere ein Lasertracking-System, auf, wobei
- die zweite Aufnahmeeinheit in einer, insbesondere vordefinierten, Distanz zum Benutzer angeordnet ist, so dass durch die zweite Aufnahmeeinheit dreidimensionale Informationen bezüglich eines gesamten Körpers des Benutzers oder zumindest des gesamten Gesichts erfassbar sind, insbesondere wobei dreidimensionale Informationen bezüglich der Teile des Gesichts, die von dem visuellen Ausgabegerät verdeckt werden, nicht von der zweiten Aufnahmeeinheit erfassbar sind,
- die zweite Aufnahmeeinheit dazu ausgebildet ist, die Kopfbewegung des Benutzers, Bewegungen von Körperteilen des Benutzers und/oder eine Position des Gesichts relativ zum Körper, insbesondere zu bewegten Körperteilen, des Benutzers zu erfassen, und/oder
- die Recheneinheit die von der zweiten Aufnahmeeinheit erfassten dreidimensionalen Informationen
   ∘ mit den von der ersten Aufnahmeeinheit erfassten dreidimensionalen Informationen bezüglich des Gesichts kombiniert, und/oder
   ∘ für die Erstellung des Modells des Gesichts, die Erstellung der Simulation und/oder die Berechnung der Beleuchtung des Modells des Gesichts in der Simulation heranzieht.

In einer weiteren exemplarischen Ausführungsform weist die Beleuchtungseinheit mehrere Lichtquellen, insbesondere mehrere LEDs, auf, wobei die mehreren Lichtquellen in einer definierten Anordnung an der Beleuchtungseinheit angeordnet sind, insbesondere wobei die Anordnung der mehreren Lichtquellen
- einer Reihe,
- einer Spalte, und/oder
- einer Matrix, insbesondere einer 2x2-Matrix oder einer 4x4-Matrix, entspricht.

Diese Ausführungsform hat den Vorteil, dass durch die mehreren Lichtquellen und einer entsprechenden Anordnung dieser Lichtquellen die Teile des Gesichts aus unterschiedlichen Richtungen beleuchtet werden können und/oder jeder zu beleuchtende Gesichtsteil von seiner "eigenen" Lichtquelle beleuchtet werden kann.

In einer weiteren exemplarischen Ausführungsform ist die Beleuchtungseinheit zur Versorgung mit Energie und/oder zum Austausch von Daten / Informationen, insbesondere mittels eines Kabels, mit dem visuellen Ausgabegerät oder einem, insbesondere die Recheneinheit aufweisenden, Computer verbunden, und/oder ist für eine drahtlose Datenübertragung, insbesondere mittels Bluetooth, ausgebildet und/oder weist eine Batterieeinheit für die kabellose Energieversorgung auf.

In einer weiteren exemplarischen Ausführungsform ist die Beleuchtungseinheit derart an dem visuellen Ausgabegerät angeordnet, dass Teile des Gesichts des Benutzers, insbesondere Wimpern oder Augenbrauen, bei der Beleuchtung des Gesichts durch die Beleuchtungseinheit keine unerwünschten Schatten auf das Gesicht des Benutzers werfen. Dadurch wird das Erleben der virtuellen Realität für den Benutzer nicht durch unerwünschte Schatten gestört.

In einer weiteren exemplarischen Ausführungsform ist die Beleuchtungseinheit (bzw. das System aus Beleuchtungseinheit und Steuerungseinheit), insbesondere an einer vordefinierten Anordnungsstelle, an dem visuellen Ausgabegerät angeordnet.

Diese Ausführungsform hat den Vorteil, dass visuelle Ausgabegeräte, z.B. VR-Brillen, sehr einfach und ohne grossen Aufwand für den Benutzer mit einer Beleuchtungseinheit (bzw. dem System aus Beleuchtungseinheit und Steuerungseinheit) aufgerüstet werden können, und die angebrachte Beleuchtungseinheit dann auch direkt korrekt positioniert/ausgerichtet ist.

In einer weiteren exemplarischen Ausführungsform weist ein Computer, eine Spielekonsole, das visuelle Ausgabegerät und/oder die Beleuchtungseinheit die Recheneinheit auf.

Diese Ausführungsform hat den Vorteil, dass die Recheneinheit entweder von einem externen Gerät wie beispielsweise einem Computer und/oder der Beleuchtungseinheit (bzw. dem System aus Beleuchtungseinheit und Steuerungseinheit), wodurch der Aufbau des erfindunsggemässen Systems sehr flexibel gestaltbar ist und an das System so an die Bedürfnisse des Benutzers angepasst werden kann. Weiterhin ist es vorteilhaft, wenn die Recheneinheit in einem externen Gerät wie beispielsweise einem Computer enthalten ist, da dieses externe Gerät im Normalfall eine grössere Rechenkapazität bereitstellen kann als beispielsweise ein Mikroprozessor in der Beleuchtungseinheit (bzw. dem System aus Beleuchtungseinheit und Steuerungseinheit).

### Kurzbeschreibung der Zeichnungen

Das erfindungsgemässe System wird nachfolgend anhand von in den Figuren schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen. Im Einzelnen zeigen
- Fig. 1A-1 D:: schematische Darstellung der Erstellung des Modells des Gesichts des Benutzers mittels einer exemplarischen Ausführungsform des erfindungsgemässen Systems;
- Fig. 2A-2D:: schematische Darstellung der Beleuchtung des Gesichts des Benutzers mittels einer exemplarischen Ausführungsform des erfindungsgemässen Systems;
- Fig. 3A-7C:: schematische Darstellungen der Beleuchtung der Nase des Benutzers des Systems in Abhängigkeit von der Position der Beleuchtungseinheit an dem visuellen Ausgabegerät;
- Fig. 8:: Explosionsdarstellung einer exemplarischen Ausführungsform des erfindungsgemässen Systems;
- Fig. 9A-9B:: perspektivische Ansichten einer exemplarischen Ausführungsform des erfindungsgemässen Systems;
- Fig. 10A-10B:: perspektivische Ansichten einer exemplarischen Ausführungsform des erfindungsgemässen Systems.

### Detaillierte Beschreibung der Zeichnungen

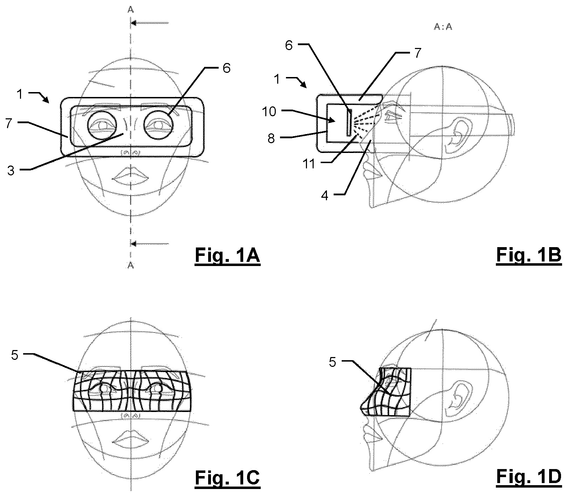

Die **Figuren 1A** bis **1D** zeigen eine schematische Darstellung der Erstellung des Modells des Gesichts des Benutzers mittels einer exemplarischen Ausführungsform des erfindungsgemässen Systems 1. In dieser Ausführungsform weist das System 1 das visuelle Ausgabegerät 7 zur Anzeige einer Simulation auf, wobei das visuelle Ausgabegerät 7 als VR-Brille ausgebildet ist. Die VR-Brille 7 bildet dabei eine Art Kammer 10 aus, die die Augenpartie sowie Teile der Nase 4 umschliesst. In dieser Kammer 10 der VR-Brille 7 ist eine Anzeigeeinheit 8 angeordnet, wobei die Anzeigeeinheit 8 als ein Bildschirm zur visuellen Anzeige der Simulation ausgebildet ist.

Weiterhin ist in der Kammer 10 der VR-Brille 7 die erste Aufnahmeeinheit 6 angeordnet, wobei die erste Aufnahmeeinheit 6 dreidimensionale Informationen (Daten) 5 bezüglich des Gesichts erfasst, aus welchen ein dreidimensionales Oberflächengitternetz (auch: 3D surface mesh) des Teils des Gesichts 3 des Benutzers erhalten wird, das von der VR-Brille 7 umschlossen ist und somit von der ersten Aufnahmeeinheit 6 erfasst werden kann. Aus diesem dreidimensionalen Oberflächengitternetz 5 wird mittels der Recheneinheit das (Drahtgitter-)Modell des Gesichts, insbesondere ein dreidimensionales Modell, erstellt.

**Figur 1A** zeigt dabei, dass bei der gezeigten Ausführungsform die erste Aufnahmeeinheit 6 zweiteilig ausgebildet ist, wobei jeweils ein Teil der ersten Aufnahmeeinheit ringförmig oder als eine Art runde Linse ausgebildet ist und auf Augenhöhe in der Kammer 10 der VR-Brille 7 angeordnet ist. Der Benutzer kann dabei durch die erste Aufnahmeeinheit 6 hindurch auf die Anzeigeeinheit 8 blicken, wodurch dem Benutzer zeitgleich die Simulation angezeigt werden kann, er in die virtuelle Realität eintauchen kann und die erste Aufnahmeeinheit 6 dreidimensionale Informationen (Daten) 5 bezüglich des Gesichts erfassen kann.

In einer weiteren Ausführungsform ist die erste Aufnahmeeinheit 6 dabei derart ausgebildet, dass Bewegungen des Gesichts 3 durch die erste Aufnahmeeinheit 6 erfasst werden und die dreidimensionalen Informationen 5 bezüglich des Gesichts entsprechend aktualisiert werden. Die Recheneinheit passt dann das Modell des Gesichts basierend auf den aktualisierten dreidimensionalen Informationen bezüglich des Gesichts an.

In einer weiteren Ausführungsform weist das System 1 eine Speichereinheit auf, die dazu ausgebildet ist, die erfassten und/oder aktualisierten dreidimensionalen Informationen (Daten) 5 bezüglich des Gesichts zu speichern. Die von der ersten Aufnahmeeinheit 6 erfassten und/oder aktualisierten dreidimensionalen Informationen (Daten) 5 können zur Erstellung des Modells des Gesichts durch die Recheneinheit direkt von der ersten Aufnahmeeinheit 6 an die Recheneinheit übertragen werden und/oder von der ersten Aufnahmeeinheit 6 an die Speichereinheit übertragen werden, wobei die Recheneinheit die dort gespeicherten dreidimensionalen Informationen (Daten) 5 bezüglich des Gesichts bei Bedarf für die Erstellung des Modells des Gesichts, für die Erstellung der Simulation, für die Integration des Modells des Gesichts in die Simulation, und/oder für die Berechnung der Beleuchtung des Modells des Gesichts in der Simulation abrufen und verarbeiten kann.

**Figur 1B** zeigt dabei, dass bei der gezeigten Ausführungsform die erste Aufnahmeeinheit 6 in etwa mittig in der Kammer 10 der VR-Brille 7 bzw. auf halber Strecke zwischen dem Gesicht 3 des Benutzers und der Anzeigeeinheit 8 angeordnet ist. Die gestrichelten Linien 11 verdeutlichen dabei den Aufnahmebereich (Scan-Bereich) der ersten Aufnahmeeinheit 6.

Die **Figuren 1C** und **1D** zeigen das aus den durch die erste Aufnahmeeinheit 6 erfassten dreidimensionalen Informationen (Daten) generierte 3D-Oberflächengitternetz 5.

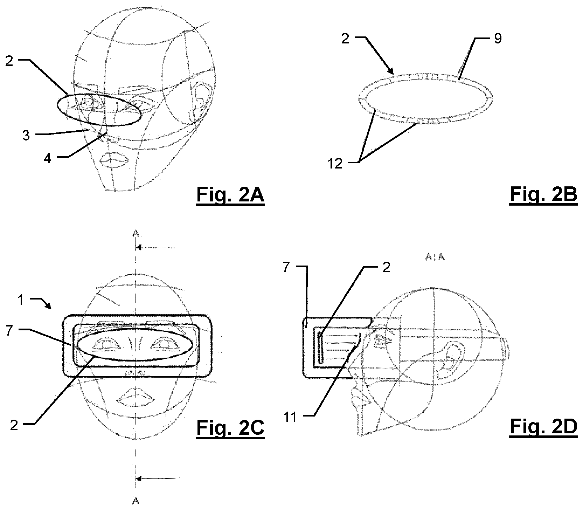

Die **Figuren 2A** bis **2D** zeigen eine schematische Darstellung der Beleuchtung des Gesichts 3 des Benutzers mittels einer exemplarischen Ausführungsform des erfindungsgemässen Systems 1.

Die Beleuchtungseinheit 2 ist dabei als ovaler Ring ausgebildet, wobei der ovale Ring aus mehreren nebeneinander angeordneten Abschnitten 12 besteht. In diesen Abschnitten sind Lichtquellen 9 angeordnet, wobei diese Lichtquellen 9 beispielsweise (in Reihe geschaltete) Leuchtdioden (LEDs) sein können. Die jeweiligen Abschnitte 12 der Beleuchtungseinheit 2 können dabei unterschiedlich gross ausgebildet sein, wobei die Abschnitte 12 in den Aussenbereichen des Ovals, also an den Bereichen neben den Augen, grösser ausgebildet sind und hin zur Mitte des Ovals, also den Bereichen um die Nase, immer kleiner ausgebildet werden. Auf diese Weise können die Lichtquellen 9 in den grossen Abschnitten 12 weiter beabstandet voneinander angeordnet werden, wodurch die Aussenbereiche des Gesichts 3 weniger stark beleuchtet werden. Die Beleuchtung der Aussenseite des Gesichts 3 muss dabei auch nicht so stark ausfallen, da sich weiter aussen liegende Lichtquellen 9 nicht mehr im Sichtfeld des Benutzers befinden, auf der einen Aussenseite liegende Lichtquellen 9 durch das Gesicht 3 von der anderen Seite abgeschirmt sind, wodurch die abgeschirmte Aussenseite von diesen Lichtquellen 9 nicht beleuchtet wird und daher dunkler ist, und in diesen Aussenbereichen keine Erhebungen wie beispielsweise die Nase 4 vorliegen, die sehr einfach von vielen Seiten beleuchtet werden können. Aus den genannten Gründen ist der Nasenbereich 4 vorzugsweise sehr hell zu beleuchten, weshalb durch die kleineren Abschnitte 12 um den Nasenbereich 4 viele Lichtquellen 9 eng nebeneinander angeordnet werden können, die diese helle Beleuchtung bereitstellen.

Dadurch, dass die Beleuchtungseinheit 2 als ovaler Ring ausgebildet ist, kann der Benutzer durch die Beleuchtungseinheit 2 hindurch auf die Anzeigeeinheit 8 blicken, wodurch dem Benutzer zeitgleich die Simulation angezeigt werden kann.

**Figur 2D** zeigt dabei, dass bei der gezeigten Ausführungsform die Beleuchtungseinheit 2 ganz hinten in der Kammer der VR-Brille 7 bzw. mit kurzem Abstand zur Anzeigeeinheit 8 angeordnet ist. Die Pfeile 13 verdeutlichen dabei die von der Beleuchtungseinheit 2 ausgesendeten Lichtstrahlen.

Die Beleuchtungseinheit 2 ist dabei nicht zwangsweise an dem visuellen Ausgabegerät 7 angeordnet, sondern kann auch als eine separate Einheit, welche zusammen mit der Steuerungseinheit das erfindungsgemässe System 1 ausbildet, ausgebildet sein. Dementsprechend können visuelle Ausgabegeräte, z.B. VR-Brillen, nach dem Stand der Technik mit dem erfindungsgemässen System 1 (Beleuchtungseinheit 2 und Steuerungseinheit) aufgerüstet werden. Die Recheneinheit kann dabei als Teil dieses Systems 1 oder als Teil des visuellen Ausgabegerätes 7 und/oder als Teil eines separaten Gerätes, z.B. eines Computers, ausgebildet sein. Die Energieversorgung, Kommunikation und/oder Datenübertragung zwischen dem erfindungsgemässen System 1 und der Recheneinheit kann dabei mittels Kabel und/oder drahtloser Datenübertragung, insbesondere mittels Bluetooth, erfolgen. In einer weiteren Ausführungsform weist das erfindungsgemässe System 1 die Beleuchtungseinheit 2, die Steuerungseinheit, die Recheneinheit, die erste Aufnahmeeinheit 6 und das visuelle Ausgabegerät 7, insbesondere ausgebildet als HMD bzw. VR-Brille, auf.

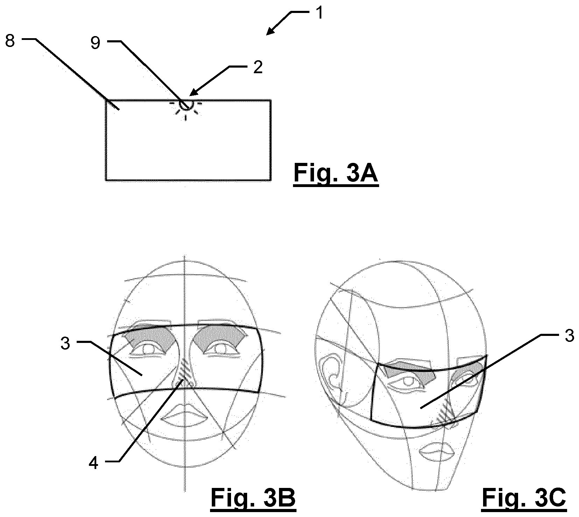

Die **Figuren 3A** bis **7C** zeigen schematische Darstellungen der Beleuchtung der Nase 4 des Benutzers des Systems 1 in Abhängigkeit von der Position der Beleuchtungseinheit 2 zum visuellen Ausgabegerät 7.

**Figur 3A** zeigt eine Draufsicht auf die als Bildschirm ausgebildete Anzeigeeinheit 8 aus der Sicht des Benutzers des HMD 7 bzw. der VR-Brille 7. Die Position der Beleuchtungseinheit 2 ist hierbei schematisch als Sonne dargestellt, wobei hiermit nicht ausgedrückt werden soll, dass die Beleuchtungseinheit 2 eine einzelne Lichtquelle 9, also beispielsweise eine einzelne LED, ist. Die Beleuchtungseinheit 2 kann vielmehr eine Anordnung von mehreren Lichtquellen 9 (z.B. LEDs) sein, die jedoch an einer bestimmten Position in der Kammer 10 der VR-Brille 7 angeordnet sind.

Bei den **Figuren 3A** bis **3C** ist die Beleuchtungseinheit 2 mittig und oberhalb der Anzeigeeinheit 8 positioniert, wodurch die Nasenspitze des Benutzers sehr gut beleuchtet wird. Die beleuchteten Teile des Gesichts 3 sind in den **Figuren 3A** bis **7C** als schraffierte Bereiche gekennzeichnet. Aufgrund der frontalen Beleuchtung des Gesichts 3 von oben herab, werden Teile des Gesichts 3, wie zum Beispiel die Augenhöhlen kaum oder gar nicht beleuchtet. Die kaum oder gar nicht beleuchteten Teile des Gesichts sind in den **Figuren 3A** bis **7C** als graue, flächige Bereiche gekennzeichnet.

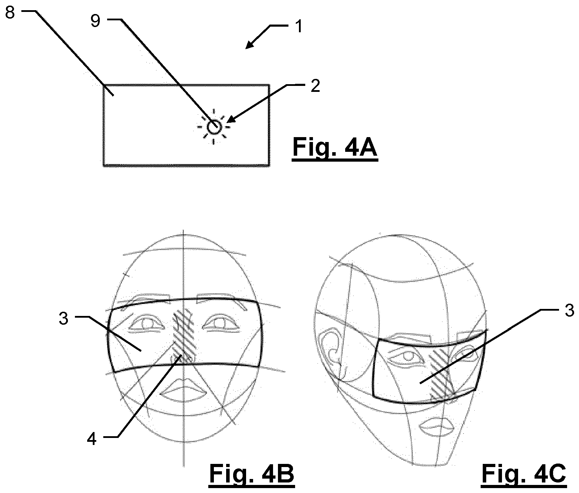

Bei den **Figuren 4A** bis **4C** ist die Beleuchtungseinheit 2 mittig (leicht seitlich versetzt) und etwa auf Augenhöhe vor der Anzeigeeinheit 8 positioniert, wodurch die gesamte Nase 4, insbesondere der gesamte Nasenrücken bis zur Nasenspitze, des Benutzers sehr gut beleuchtet wird.

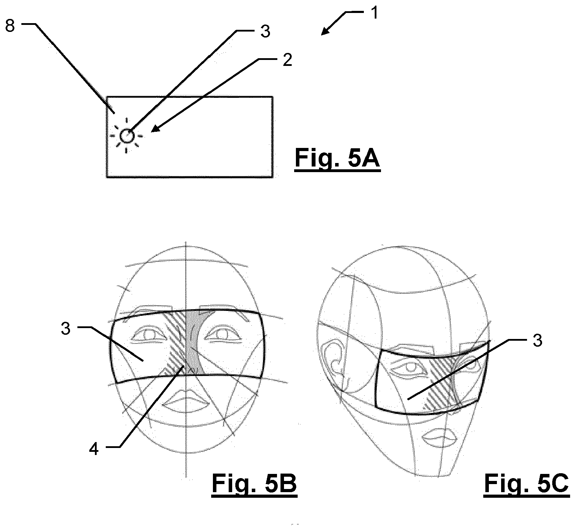

Bei den **Figuren 5A** bis **5C** ist die Beleuchtungseinheit 2 seitlich deutlich versetzt (also am äusseren Seitenrand der Anzeigeeinheit 8) und etwa auf Augenhöhe vor der Anzeigeeinheit 8 positioniert, wodurch die Seite der Nase sehr gut beleuchtet wird, die der Lichtquelle 9 zugewandt ist (schraffierter Bereich). Die Seite der Nase 4, die der Lichtquelle 9 abgewandt ist, wird hingegen kaum oder gar nicht beleuchtet (grauer Bereich).

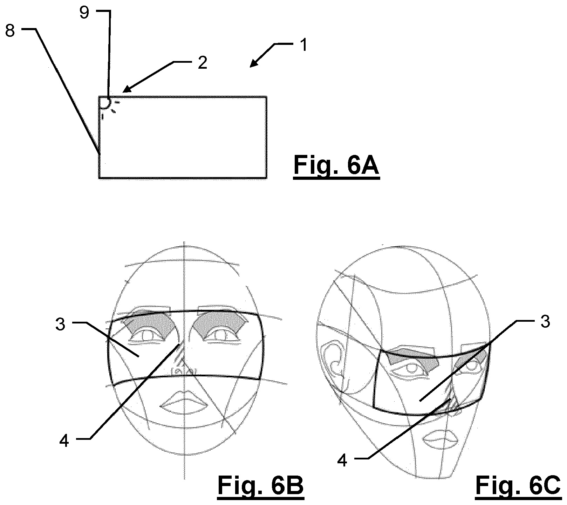

Bei den **Figuren 6A** bis **6C** ist die Beleuchtungseinheit 2 seitlich deutlich versetzt (also am äusseren Seitenrand der Anzeigeeinheit 8) und am oberen Rand der Anzeigeeinheit 8 positioniert, wodurch die Nasenspitze auf der Seite der Nase 4, die der Lichtquelle 9 zugewandt ist (schraffierter Bereich), sehr gut beleuchtet wird. Die Augenhöhlen werden hingegen kaum oder gar nicht beleuchtet (grauer Bereich).

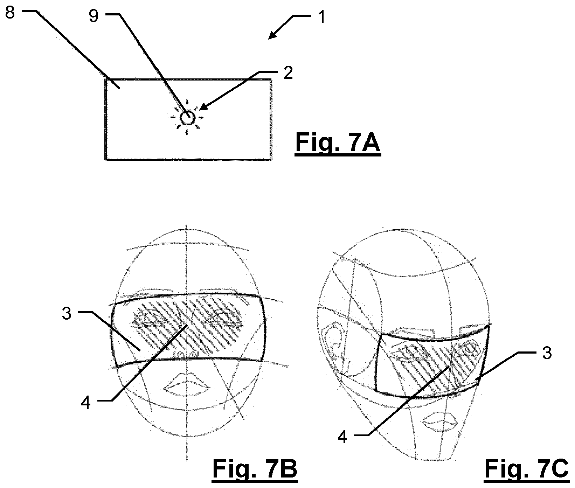

Bei den **Figuren 7A** bis **7C** ist die Beleuchtungseinheit 2 zentral und etwa auf Augenhöhe vor der Anzeigeeinheit 8 positioniert, wodurch insbesondere der zentrale Bereich des gesamten Gesichts 3 sehr gut beleuchtet wird (schraffierter Bereich).

Ob kleine Teile des Gesichts 3, wie zum Beispiel bei den **Figuren 3A** bis **6C****,** oder grössere Bereiche, wie zum Beispiel bei den **Figuren 7A** bis **7C****,** beleuchtet werden, hängt neben der Positionierung der Beleuchtungseinheit 2 an dem visuellen Ausgabegerät 7, insbesondere der VR-Brille, auch sehr stark von der Ausgestaltung der Beleuchtungseinheit 2 ab. Ist die Beleuchtungseinheit 2 beispielsweise als eine oder zumindest wenige LEDs 9 ausgestaltet, so können kleine Teile des Gesichts 3 sehr konkret beleuchtet werden, ohne dass die weiteren Teile des Gesichts 3 beleuchtet werden. Ist die Beleuchtungseinheit 2 hingegen, wie bei dem Ausführungsbeispiel von **Figur 2B****,** als ovaler Ring mit einem grösseren Umfang ausgebildet, so kann ein grösserer Bereich des Gesichts 3 beleuchtet werden.

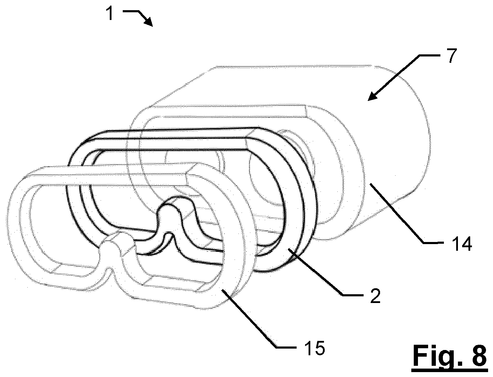

**Figur 8** zeigt eine Explosionsdarstellung einer exemplarischen Ausführungsform des erfindungsgemässen Systems 1, aufweisend ein Hauptgehäuse 14 der VR-Brille 7, eine Beleuchtungseinheit 2 und eine Gesichtsauflage 15 (z.B. ein Gesichtspolster), das auf das Gesicht 3 aufgelegt wird, wenn der Benutzer in das als VR-Brille 7 ausgebildete visuelle Ausgabegerät 7 blickt. In dieser Ausführungsform ist die Beleuchtungseinheit 2 in der Form der Gesichtsauflage 15 ausgebildet und bildet somit eine Umrandung für den Teil des Gesichts 3, der sich innerhalb der Gesichtsauflage 15 befindet. Da eine Vielzahl von Lichtquellen 9 (z.B. eine Vielzahl von LEDs) an verschiedenen, definierten Positionen innerhalb der als Umrandung ausgebildeten Beleuchtungseinheit 2 angeordnet sein können, kann durch Ansteuern der entsprechenden Lichtquelle 9 der entsprechende (angrenzende) Teil des Gesichts 3 des Benutzers von der Lichtquelle 9 der Beleuchtungseinheit 2 beleuchtet werden.

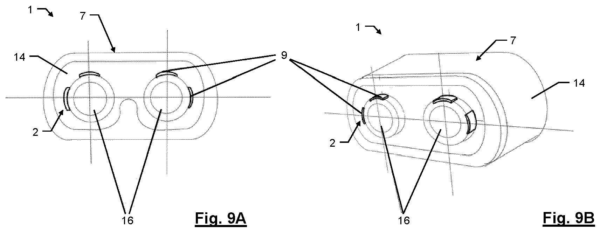

Die **Figuren 9A** und **9B** zeigen perspektivische Ansichten einer exemplarischen Ausführungsform des erfindungsgemässen Systems 1. Bei dieser Ausführungsform weist das Gehäuse 14 der VR-Brille 7 zwei Erhöhungen 16 auf, die dazu ausgebildet sind, auf die Augen des Benutzers aufgelegt zu werden, um es dem Benutzer so zu ermöglichen, auf die Anzeigeeinheit 8 innerhalb des Gehäuses 14 der VR-Brille 7 zu blicken. Die Beleuchtungseinheit 2 ist dabei derart ausgebildet, dass die Lichtquellen 9 der Beleuchtungseinheit 2 an den Erhöhungen 16 des Gehäuses 14 der VR-Brille 7 angeordnet sind, wodurch Teile des Gesichts 3, insbesondere die Augenpartie und die Nase 4, des Benutzers beleuchtet werden können.

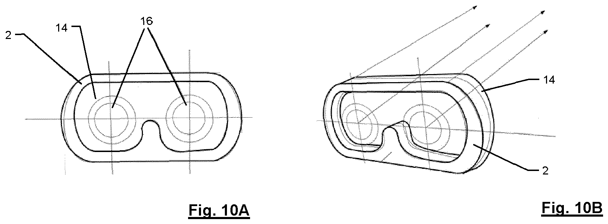

Die **Figuren 10A** und **10B** zeigen perspektivische Ansichten einer exemplarischen Ausführungsform des erfindungsgemässen Systems 1. Bei dieser Ausführungsform ist die Beleuchtungseinheit 2 zeitgleich auch als Gesichtsauflage ausgebildet, wobei diese Beleuchtungseinheit 2 dazu ausgebildet ist, aussen auf ein visuelles Ausgabegerät, also beispielsweise eine VR-Brille, des Stands der Technik aufgesetzt und dort angebracht zu werden. Auf diese Weise können bestehende VR-Systeme ganz einfach mit dem erfindungsgemässen System 1 aufgerüstet werden.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. System (1) zur Bereitstellung einer auf einer Simulation basierenden virtuellen Realität für einen Benutzer des Systems (1), aufweisend
• eine Beleuchtungseinheit (2), dazu ausgebildet, zumindest einen Teil eines Gesichts (3) des Benutzers, insbesondere eine Nase (4) des Benutzers, variabel zu beleuchten, und
• eine Steuerungseinheit, wobei die Steuerungseinheit dazu ausgebildet ist, Informationen von einer Recheneinheit zu erhalten, wobei die Recheneinheit dazu ausgebildet ist,
∘ aus, insbesondere optisch erfassten, dreidimensionalen Informationen (5) bezüglich des Gesichts ein Modell des Gesichts, insbesondere ein dreidimensionales Modell, zu erstellen,
∘ die Simulation zu erstellen, wobei für die Erstellung der Simulation das Modell des Gesichts berücksichtigt wird,
∘ das Modell des Gesichts in die Simulation zu integrieren,
∘ eine Beleuchtung des Modells des Gesichts in der Simulation zu berechnen, und
∘ Informationen an die Steuerungseinheit zu übermitteln,
**dadurch gekennzeichnet, dass**
die Steuerungseinheit dazu ausgebildet ist, von der Recheneinheit Informationen hinsichtlich der Beleuchtung des Modells des Gesichts in der Simulation zu erhalten, wobei die Steuerungseinheit basierend auf den Informationen hinsichtlich der Beleuchtung des Modells des Gesichts in der Simulation die Beleuchtungseinheit (2) derart steuert, dass eine Beleuchtung des Gesichts (3) durch die Beleuchtungseinheit (2) mit der Beleuchtung des Modells des Gesichts in der Simulation korrespondiert.

2. System (1) nach Anspruch 1, wobei das System (1)
• die Recheneinheit aufweist,
• eine erste Aufnahmeeinheit (6), insbesondere eine Kamera, aufweist, wobei die erste Aufnahmeeinheit (6) dazu ausgebildet ist, die dreidimensionalen Informationen (5) bezüglich des Gesichts (3), insbesondere optisch, zu erfassen, und/oder
• ein visuelles Ausgabegerät (7) aufweist, wobei das visuelle Ausgabegerät (7)
∘ dazu ausgebildet ist, dem Benutzer die virtuelle Realität anzuzeigen, und/oder
∘ eine Anzeigeeinheit (8) aufweist, wobei die Anzeigeeinheit (8) als ein Bildschirm ausgebildet ist, wobei auf dem Bildschirm die Simulation anzeigbar ist.

3. System (1) nach Anspruch 1 oder 2, wobei die Recheneinheit Einstellungsparameter, insbesondere Einstellungsparameter wie Hautfarbe, Zubehör wie Brillen und/oder Schmuck, Lichtpräferenzen, insbesondere Lichtintensität, Lichttemperatur, Lichtfarbe und/oder Beleuchtungsstärke, der Beleuchtung in der Simulation, insbesondere der Beleuchtung des Modells des Gesichts in der Simulation, und/oder der Beleuchtung des Gesichts (3) durch die Beleuchtungseinheit (2), die durch eine manuelle Eingabe des Benutzers und/oder durch eine Eingabe eines Anbieters der Simulation, insbesondere über eine Programmierschnittstelle, bereitstellbar sind, für
• die Erstellung des Modells des Gesichts,
• die Erstellung der Simulation,
• die Integration des Modells des Gesichts in die Simulation, und/oder
• die Berechnung der Beleuchtung des Modells des Gesichts in der Simulation,
heranzieht.

4. System (1) nach Anspruch 2, wobei die erste Aufnahmeeinheit (6)
• an dem visuellen Ausgabegerät (7) angeordnet ist, und/oder
• Bewegungen des Gesichts (3) als aktualisierte dreidimensionale Informationen bezüglich des Gesichts erfasst und die Recheneinheit das Modell des Gesichts basierend auf den aktualisierten dreidimensionalen Informationen bezüglich des Gesichts anpasst.

5. System (1) nach Anspruch 2, wobei das visuelle Ausgabegerät (7) einen ersten Bewegungssensor aufweist, der dazu ausgebildet ist, eine Kopfbewegung des Benutzers zu erfassen.

6. System (1) nach einem der vorhergehenden Ansprüche, wobei das System (1) mindestens eine Bewegungseinheit aufweist, wobei die mindestens eine Bewegungseinheit
• an einem Körperteil, insbesondere an einer Hand, des Benutzers angeordnet ist, und
• einen zweiten Bewegungssensor aufweist, der dazu ausgebildet ist, eine Bewegung des besagten Körperteils zu erfassen.

7. System (1) nach Anspruch 5 und 6, wobei das visuelle Ausgabegerät (7) und die mindestens eine Bewegungseinheit jeweils mindestens einen Positionssensor aufweisen, wobei die Recheneinheit eine Position des visuellen Ausgabegeräts (7) und dadurch des Gesichts (3) des Benutzers relativ zu einer Position der mindestens einen Bewegungseinheit bestimmt.

8. System (1) nach einem der Ansprüche 5 bis 7, wobei die Recheneinheit die von dem ersten Bewegungssensor, dem zweiten Bewegungssensor und/oder den jeweiligen Positionssensoren bereitgestellten Daten für
• die Erstellung der Simulation, und/oder
• die Berechnung der Beleuchtung des Modells des Gesichts in der Simulation,
heranzieht.

9. System (1) nach Anspruch 3, wobei die Recheneinheit für die Erstellung der Simulation, und/oder die Berechnung der Beleuchtung des Modells des Gesichts in der Simulation, insbesondere unter Berücksichtigung der bereitgestellten Einstellungsparameter, berechnet
• aus welcher Richtung Licht einer in der Simulation vorgesehenen Lichtquelle auf das Modell des Gesichts in der Simulation strahlt,
• wie das Licht, insbesondere Lichtintensität, Lichttemperatur, Lichtfarbe und/oder Beleuchtungsstärke, der Lichtquelle das Modell des Gesichts in der Simulation beleuchtet,
• wie eine aus den von der ersten Aufnahmeeinheit (6) erfassten dreidimensionalen Informationen bezüglich des Gesichts abgeleitete Gesichtsgeometrie die Beleuchtung des Modells des Gesichts in der Simulation beeinflusst,
• wo sich das Modell des Gesichts in der Simulation relativ zur Lichtquelle befindet,
• ob weitere Körperteile, insbesondere das Körperteil an dem die mindestens eine Bewegungseinheit angeordnet ist, in der Simulation Schatten auf das Modell des Gesichts in der Simulation werfen, wodurch insbesondere die Beleuchtungsstärke in Bereichen, in denen Schatten auf das Modell des Gesichts in der Simulation geworfen werden, reduziert ist,
• wie Wettereinflüsse in der Simulation die Beleuchtung des Modells des Gesichts in der Simulation, insbesondere hinsichtlich Lichtintensität, Lichttemperatur, Beleuchtungsstärke und/oder Reflexionen, beeinflussen,
• wie weit die Lichtquelle von dem Modell des Gesichts in der Simulation entfernt ist, und/oder
• wie das Licht der Lichtquelle von Objekten in der Simulation reflektiert wird, insbesondere wobei die Recheneinheit für die Berechnung Lichtquellen der Simulation, die sich in einem Blickfeld des Benutzers und/oder Lichtquellen der Simulation, die sich nicht im Blickfeld des Benutzers befinden, heranzieht.

10. System (1) nach Anspruch 2, wobei
• die erste Aufnahmeeinheit (6) eine Blickrichtung des Benutzers erfasst,
• die Recheneinheit aus der von der ersten Aufnahmeeinheit (6) erfassten Blickrichtung ein Blickfeld des Benutzers ableitet, und
• die Steuerungseinheit die Beleuchtungseinheit (2) derart steuert, dass
∘ die Beleuchtung auf die Teile des Gesichts (3) gedimmt und/oder ausgeschaltet ist, die sich nicht im Blickfeld des Benutzers befinden, und/oder
∘ die Beleuchtung auf die Teile des Gesichts (3) verstärkt ist, die sich im Blickfeld des Benutzers befinden.

11. System (1) nach einem der vorhergehenden Ansprüche, wobei die Beleuchtungseinheit (2) eine Lichtquelle (9), insbesondere eine Leuchtdiode (LED), aufweist.

12. System (1) nach einem der vorhergehenden Ansprüche, wobei die Beleuchtungseinheit (2) zwei Lichtquellen, insbesondere LEDs, aufweist, wobei
• eine erste Lichtquelle, insbesondere eine erste LED, derart angeordnet und ausgerichtet ist, dass ein oberer Teil der Nase des Benutzers beleuchtet wird, und
• eine zweite Lichtquelle, insbesondere eine zweite LED, derart angeordnet und ausgerichtet ist, dass ein unterer Teil der Nase des Benutzers beleuchtet wird.

13. System (1) nach einem der vorhergehenden Ansprüche, wobei die Beleuchtungseinheit (2) ein Lichtlenkungselement, insbesondere eine Linse, und/oder eine Blende aufweist, jeweils dazu ausgebildet, Licht der Beleuchtungseinheit (2) auf einen Teil des Gesichts (3) des Benutzers, insbesondere die Nase (4) des Benutzers, zu fokussieren.

14. System (1) nach Anspruch 13, wobei eine Anordnung des Lichtlenkungselements und/oder der Blende an der Beleuchtungseinheit (2) veränderbar ist, um die Beleuchtungseinheit (2) an Gesichter unterschiedlicher Benutzer anpassbar zu machen.

15. System (1) nach Anspruch 2, wobei das System (1) eine zweite Aufnahmeeinheit, insbesondere ein Lasertracking-System, aufweist, wobei
• die zweite Aufnahmeeinheit in einer, insbesondere vordefinierten, Distanz zum Benutzer angeordnet ist, so dass durch die zweite Aufnahmeeinheit dreidimensionale Informationen bezüglich eines gesamten Körpers des Benutzers oder zumindest des gesamten Gesichts (3) erfassbar sind, insbesondere wobei dreidimensionale Informationen bezüglich der Teile des Gesichts (3), die von dem visuellen Ausgabegerät (7) verdeckt werden, nicht von der zweiten Aufnahmeeinheit erfassbar sind,
• die zweite Aufnahmeeinheit dazu ausgebildet ist, die Kopfbewegung des Benutzers, Bewegungen von Körperteilen des Benutzers und/oder eine Position des Gesichts (3) relativ zum Körper, insbesondere zu bewegten Körperteilen, des Benutzers zu erfassen, und/oder
• die Recheneinheit die von der zweiten Aufnahmeeinheit erfassten dreidimensionalen Informationen
∘ mit den von der ersten Aufnahmeeinheit (6) erfassten dreidimensionalen Informationen (5) bezüglich des Gesichts kombiniert, und/oder
∘ für die Erstellung des Modells des Gesichts, die Erstellung der Simulation und/oder die Berechnung der Beleuchtung des Modells des Gesichts in der Simulation heranzieht.
